# EUROPEAN PATENT APPLICATION

(11) **EP 4 845 096 A1**
(43) Date of publication of application: **25.11.2026**
(21) Application number: 25177288.5
(22) Date of filing: 19.05.2025
(51) Int. Cl.: H04L 9/40, H04W 12/06, H04W 12/50

(54) **FIELD DEVICE CONFIGURED FOR ESTABLISHING A WIRELESS CONNECTION WITH A TERMINAL DEVICE**

(71) Applicant: ABB SCHWEIZ AG, 5400 Baden (CH)
(72) Inventor: MERLIN, Tilo, 63589 Linsengericht (DE); KAMATH, Shanthala, Bothell, 98012 (US); FENGLER, Frank, 32427 Minden (DE); RAO, Mahender, 560049 Bengaluru (IN)
(74) Representative: Maiwald GmbH

(57) **Abstract**

The disclosure relates to a field device (10) configured for establishing a wireless connection with a terminal device (20), the field device (10) comprising:
- a processing circuitry (110) configured to generate a code;
- an output circuitry (120) configured to output the generated pairing code for obtainment by the terminal device (20); and
- a communication circuitry (130) configured to wirelessly communicate with the terminal device (20) and to receive the obtained code from the terminal device (20), wherein the processing circuitry (110) is configured to compare the generated code with the received code, and wherein the communication circuitry (130) is configured to establish the wireless connection to the terminal device (20) when the generated code matches the received code.

## Description

### TECHNICAL FIELD

The present invention relates to field device configured for establishing a wireless connection with a terminal device, a terminal device configured for establishing a wireless connection with a field device, a system for a wireless connection process, and a method for establishing a wireless connection between a field device and a terminal device.

### BACKGROUND

In modern process automation systems, field devices are used to fulfil critical measurement, control and monitoring tasks in industrial plants. These devices are often installed in areas that can be difficult to access or even dangerous - for example, near hot surfaces, rotating machinery or at heights. The physical accessibility of such devices is often limited, making access difficult for both operators and maintenance and repair personnel.

As digitalization progresses and industrial systems become increasingly networked, wireless connection technologies such as Bluetooth are becoming more and more important. Bluetooth allows field devices to be controlled, monitored and maintained from terminal devices, such as smartphones or tablets, in addition to their wired connection. Conventional access to field devices is often via fixed or manually changeable access codes, which are listed e.g. in the operating instructions or preset directly on the device. In many applications, the codes used are permanently valid, which means that they remain active even after the first use. This static procedure harbors the risk that unauthorized third parties who find out the code, e.g. via a published operating manual or by intercepting the communication, can gain continuous access to the device. Some systems allow the code to be changed manually via local controls. Although this method can offer a certain level of security, it requires a high degree of user discipline. Codes are often not changed regularly for convenience, so there is also a risk of unauthorized access. Existing solutions therefore either rely too heavily on user interaction, such as manual code changes, or on static, easily guessable codes, which harbors an increased security risk.

The increasing integration of wireless access technologies, such as Bluetooth, has further intensified these challenges. Bluetooth signals can be received from distances of up to thirty meters, meaning that an attacker no longer requires physical proximity to the instrument. Consequently, existing solutions either lean heavily on user intervention or fall back on static, easily discoverable codes, both of which provide insufficient protection for modern, openly accessible industrial environments.

### SUMMARY

The above problem or need is at least partially solved or alleviated by the subject matters of the independent claims of the present disclosure, wherein further examples are incorporated in the dependent claims.

According to an aspect of the present disclosure, there is provided a field device configured for establishing a wireless connection with a terminal device, the field device comprising:
- a processing circuitry configured to generate a code;
- an output circuitry configured to output the generated pairing code for obtainment by the terminal device; and
- a communication circuitry configured to communicate with the terminal device and to receive the obtained code from the terminal device, wherein the processing circuitry is configured to compare the generated code with the received code, wherein the communication circuitry is configured to establish the wireless connection to the terminal device when the generated code matches the received code.

A field device may refer to any device or equipment installed in the field, e.g., within an industrial plant, that interacts with the physical process environment. These devices may serve as the primary interface between the process, such as temperature, pressure, flow, etc., and the control or monitoring systems. Depending on their functions and applications a field device can be sensors, transmitters, actuators, control elements, local controllers or intelligent devices, for example. Within the context of our invention, the field device may be configured to establish a wireless connection process with a terminal device.

A wireless connection may refer to any technology or method that enables communication between a field device and a terminal device without using physical cables. This may comprise communication technologies such as but not limited to standards and protocols such as Bluetooth, including Bluetooth Classic and Bluetooth Low Energy, Wi-Fi, ZigBee, or even proprietary radio frequency (RF) protocols.

A terminal device may refer to any electronic device that interacts with the field device to facilitate the wireless connection process. It is not limited to a specific category and may include various types of devices such as but not limited to mobile devices, handheld terminals or Personal Digital Assistants, remote controls, or even computers.

The processing circuitry of the field device may refer to a digital component within the field device, such as but not limited to a microprocessor, microcontroller, FPGA, or an application-specific integrated circuit (ASIC), that may be responsible for creating a code for establishing a wireless connection with the terminal device. This circuitry may execute one or more predefined algorithms to produce a code that may serve as a token for authenticating a terminal device, for example. In a typical setup, the processor runs firmware that, upon a trigger event (for example, a user prompt or an internal request), creates a random or pseudo-random code. This code may be temporarily stored in a memory so that it can be compared with an incoming code obtained from the terminal device. Code may be understood e.g., as a security token generated by the field device for the purpose of authenticating a terminal device prior to granting a full wireless session. The code may consist of such as but not limited to alphanumeric characters, a numeric PIN, binary token, a derived value, or any form suitable for authentication.

The output circuitry may be understood broadly and may encompass any functional module, whether implemented in dedicated hardware, firmware or software, that is responsible for presenting the generated pairing code in a form suitable for capture by a terminal device. It may further refer to hardware, e.g., responsible for presenting the generated code in a format that the terminal device can obtain it. For instance, the field device may output the visual code on a display, such that it may be obtainable by a terminal device. The output circuitry may comprise a display unit, such as an LCD, LED matrix, e-ink panel or simple seven-segment display, on which e.g., a numeric or alphanumeric code can be shown. In other embodiments, the output circuitry may drive an external display module or HMI panel mounted remotely from a sensor, for example.

The communication circuitry may be responsible for establishing and managing the wireless connection between the field device and the terminal device. It may function as an interface that facilitates wireless data exchange, enabling the field device to receive the code that the terminal device has obtained. The communication circuitry may receive the obtained code via a wireless transmission, e.g., by using protocols such as Bluetooth, Wi-Fi, or other suitable wireless standards.

Therefore, communication circuitry may be configured to establish a pre-connection with the terminal device prior to the exchange of the code. Before the field device and a terminal device transition into a fully established wireless session, a preliminary connection or pre-connection phase may be initiated. When a new connection session may be initiated, such as by a local HMI command or remote-control signal, the field device's communication circuitry may enter a provisional handshake mode. During this pre-connection phase, only a minimal, unauthenticated link may be formed. This pre-connection may provide just enough functionality to exchange the code while all sensitive operations, e.g., reading sensor values or modifying device parameters, remain locked. This may allow a secure exchange of the code before granting broader access rights to the terminal device, for example.

This pre-connection may leverage several wireless-protocol features, for example, the Bluetooth Low Energy "advertising plus partial-connect" sequence or an equivalent low-level binding, so that the field device and terminal exchange only the messages needed for authentication. For instance, once the field device's communication circuitry detects the terminal device and confirms that the terminal is requesting a code exchange, the field device may transmit the generated code, or awaits the terminal's provision of that code, under a limited-access channel. During this phase, sensitive functionality, such as reading sensor values or modifying device parameters, may remain locked down. Only upon successful code verification the communication circuitry may transition into a fully authorized connection state, enabling standard or privileged operations.

In alternative embodiments, the pre-connection may occur over a wired interface rather than wirelessly. For installations equipped with a maintenance port, such as HART, Fieldbus or Ethernet-APL, the same preliminary exchange of the pairing code can take place over the physical cable before the wireless link is activated.

The processing circuitry is configured to compare the generated code with the code received from the terminal device. This comparison my be performed by employing e.g., algorithms that can either execute a bit-for-bit comparison or utilize an appropriate error-checking and matching algorithm. This comparison may ensure that the code provided by the terminal device is identical to the code generated and output by the field device, thus serving as the essential authentication step in the wireless connecting process. Only upon successful validation, i.e., when the generated and received code matches, the processing circuitry may signal the establishment of the wireless connection between the field device and the terminal device.

A field device ships with no default or factory-preset pairing code, and new devices arrive without any initial code. As a result, the very first pairing, whether during installation or initial commissioning, may require physical access to the field device's local interface, so that a generated code can be displayed and obtained by the terminal device. This ensures that no remote attacker can exploit a well-known or static default code when the device is first brought online.

If the processing circuitry determines that the received pairing code does not match the generated code, or if the verification process otherwise fails, an error-handling routine may be performed. This routine may e.g., terminate the current connection attempt and initiating a generation of a new code. The new code may then be outputted via the output circuitry and made available for obtainment by the terminal device, thereby allowing a subsequent connection attempt. In some embodiments, this mechanism may also include provisions to limit the number of retries within a given time frame or to alert the user after multiple unsuccessful attempts.

A major advantage of this approach may lie in the enhanced security and user-friendliness it offers. By creating a code for each connecting attempt, static or universal default passwords are avoided, thus significantly reducing vulnerabilities. At the same time, the operator does not have to memorize or manage a permanent password.

An example may involve a process instrument for measuring fluid flow in an industrial setting. This instrument may be installed with a small control panel that includes a minimal LCD display and pushbuttons. The processor within the device may generate a short six-digit PIN upon a user pressing the "Generate Pairing Code" button. The PIN may immediately appear on the LCD display, and the user may then enter this code into a smartphone application, for example. The phone may connect to the instrument over Bluetooth, transmit the code, and receive authorization once the instrument confirmed a match. After successful connecting, the field device may provide access to real-time flow measurements, diagnostic reports, or calibration menus, for example.

In an example, the generated code may be a time-limited code that is presented for a predetermined period. Time-limited may mean that the generated code is presented by the field device for only a predetermined period. This may entail that the code, once generated by the processing circuitry, remains valid only for a defined duration, such as second, minutes, or even hours, thereafter, expiring automatically. This requirement may be implemented, for example, via a software-managed timer or a hardware-based timing mechanism that tracks the elapsed time from the moment the code is generated.

The time limitation may be realized in several ways. For example, the field device may store both the code and a timestamp of its generation in non-volatile or volatile memory, for example. A background process, or a dedicated timing function, may periodically check the difference between the current time and the generation timestamp to determine whether the threshold period has elapsed. Upon expiration, the firmware may remove or overwrite the code in memory and, if applicable, clear or change the output on the display. In cases where machine-readable output formats are employed, such as a QR code, the display may transition to an "expired" status to visually inform prospective users that the code is no longer valid.

By limiting the code's validity to a relatively short interval, the field device may reduce a risk of unauthorized use, for example. Even if an otherwise authorized individual inadvertently may share the code or leaves it visible, the code will soon become invalid once the timer expires. Consequently, any subsequent attempts to establish a wireless connection using that same code will fail, compelling operators to generate a new code. This arrangement may prevent an attacker, or anyone lacking immediate physical or concurrent access to the device, from exploiting a previously generated code long after its intended use.

In an example, the generated code may be valid for a single connection attempt. This may mean, once the processing circuitry has generated the code and the field device has presented it, any successful connection operation that uses the code may render it invalid thereafter. A subsequent pairing request, even if initiated during the same time window (if combined with time-limitation features), may be rejected unless a new code is generated.

To implement this, the field device may maintain an internal flag or status variable that is linked to the generated code, for example. As soon as the code is accepted by the communication circuitry, for instance, upon matching the incoming code from the terminal device, this status variable may be set to an invalid or "consumed" state. The firmware may then either erase the code from memory or mark it as no longer available. Consequently, even if a malicious actor learns of the code after it has been successfully used, that code cannot be exploited to gain additional access.

This single-attempt design may offer enhanced security because it shortens the potential timeframe in which a compromised or leaked code remains useful. In practice, the field device's firmware may store the code in a volatile data structure that is cleared or overwritten immediately upon completion of the pairing process. Should a legitimate user or service technician lose their connection, they may need to re-initiate the pairing workflow by generating a fresh code. In effect, the number of valid codes at any point in time is limited to exactly one, and even that single code disappears after its first successful usage.

By allowing only one valid attempt per generated code, it maybe ensured that granting temporary access to an individual automatically prevents the same code from being reused by others. This arrangement may not only heighten operational security but also maintain a high degree of user convenience.

In an example, the output circuitry may be configured to output the generated code in at least one of plain text and/or machine-readable code. This may encompass a range of output forms, reflecting different levels of user interaction and automation. For instance, a simple alphanumeric display might show the code as human-readable text, allowing the operator to manually enter it into a smartphone application or a maintenance terminal. Alternatively, the device could present the code as an optically scannable formats such as a QR code, a barcode, or other optically scannable formats that enable faster and less error-prone capturing. The field device may comprise a display unit, such as an LCD module or an OLED panel, capable of displaying textual characters. Where a machine-readable format is desired, the output circuitry may generate an image that is then rendered on a higher-resolution segment or graphic display. In other embodiments, the output could be provided via radio-frequency identification (RFID) like via NFC tags, where the "machine-readable code" is delivered through short-range wireless interactions rather than visual scanning. Regardless of the chosen medium, the technical requirement is that the field device has a means of conveying the generated code in a format that the terminal device, or the user operating that device, can reliably capture.

In an example, the processing circuitry may be configured to initiate the code generation by one of the following, manually via a local human-machine interface; via a network communication interface; or via a mobile application.

The processing circuitry may include a microcontroller or microprocessor, along with associated memory, capable of executing firmware routines that monitor multiple possible inputs, for example. In the scenario of manual initiation, a physical button press or a menu selection on a local display may prompt the generation of a new code, for example. This manual approach may be advantageous, for example, if the device is only accessible on site for a short time (e.g. during an inspection) and if immediate code generation is preferable to a request from another party, for example. In the scenario of initiation via a network communication interface, such as HART, Fieldbus, or Ethernet/APL, the processing circuitry may monitor incoming protocol messages and, upon detecting the appropriate command, generates a new pairing code. The freshly created code may be then returned to the requester in the corresponding network response (for example, as a reply to the HART master, a Fieldbus frame, or an Ethernet/APL response). Once generated, the new code may be delivered back to the requester over that same interface (e.g. displayed on the local HMI, returned in the Fieldbus/Ethernet response, etc.) This may be particularly valuable in scenarios where the field device is installed in a remote or hazardous location. For instance, an operator from a central control room may transmit a request to create a code, thus eliminating the need for direct physical interaction with the device. The processing circuitry may detect the incoming instruction, runs its random- or pseudo-random generation routine, and provides the resulting code via the designated output circuitry. In the scenario of initiation via a mobile application, the terminal device may already be in limited communication with the field device, e.g., through a low-level or partial wireless connection, to request the generation of a fresh code. Upon creation, the code may be simultaneously sent to and displayed in the mobile app, ensuring the user who requested it receives it without any additional step. This method may be advantageous if the user e.g., has preliminary access to the device (such as a previously established session with restricted privileges) and wishes to escalate or grant pairing access to a new terminal without resorting to physical interventions.

The technical advantage of offering multiple initiation paths may lie in the resultant adaptability and security. Some facilities prioritize hands-on local control, while others rely heavily on central or remote orchestration through industrial networking. By enabling the processing circuitry to handle requests from any of these routes, the invention may provide a flexible, unified framework for code-based access control that accommodates different user roles, equipment footprints, and safety requirements.

In an example, the communication circuitry may be configured to terminate the established wireless connection prior to initiating a new wireless connection process. This may address scenarios in which the field device intentionally restricts itself to one active connection at a time or requires disconnection before granting pairing rights to a different terminal device, for example. By imposing a requirement to end the existing session, the field device may prevent concurrency conflicts and potential security vulnerabilities that may arise when multiple sessions or pairing attempts compete for access simultaneously.

The communication circuitry, such as a Bluetooth or Wi-Fi module, may execute a controlled shutdown of the ongoing communication session, e.g., upon detecting a new pairing request or upon receiving a specific command from the field device's processing circuitry. The firmware may, for example, issue a disconnect signal or command that gracefully ends the current session. Once the communication interface confirms the connection is terminated, the firmware may proceed with generating or validating a new code for the next pairing request. In industrial contexts, this one-connection paradigm may help to avoid confusion about which user or terminal has authoritative control over the device's parameters at any given moment.

This two-step process may strengthen security by limiting the field device's exposure. Unauthorized devices may discover or partially handshake with the field device, but they cannot gain meaningful access without first supplying the valid code.

In an example, the processing circuitry may be further configured to generate a code in response to a delegation request issued by a first terminal device that already established a wireless connection; and the communication circuitry may be configured to transmit the code to the first terminal device for obtainment by a second terminal device, wherein the communication circuitry may be configured to communicate with the second terminal device and to receive the obtained code from the second terminal device, wherein the processing circuitry may be configured to compare the generated code with the received code, wherein the communication circuitry may be configured to establish the wireless connection to the second terminal device when the generated code matches the received code.

This may mean, exchange of the code may be delegated by a terminal device that already established a wireless connection with the field device. A delegation request may refer to any message or command sent by an already-paired terminal to the field device, instructing it to produce a fresh pairing code on behalf of a second terminal. Thus, a delegated pairing may be supported, wherein an already authenticated terminal device may generate and distribute a fresh code to a second terminal without physical access to the field device itself, for example. For instance, once a first terminal has established a connection session with the field device, that first terminal device may issue a "generate code" command over the same authenticated link. A new code for pairing may be generated and transmitted to the first terminal. The first terminal device may display or transmit this code to a second terminal (for example, as alphanumeric text to be manually entered, as a scanned 2D code, or via an NFC tap). Before the second terminal device may proceed with its own connection process, the first communication session may be terminated. This may mean, the communication circuitry is further configured to terminate the existing wireless connection with the first terminal device prior to establishing the provisional link and exchanging the code with the second terminal device. This may ensure that at no time are more than one active connection maintained. This delegated pairing mechanism may simplify field operations in hard-to-reach installations by allowing one authorized technician to grant pairing rights to another without requiring both to climb to the instrument.

In an alternative embodiment, the delegated-pairing exchange may not occur via a direct link between the second terminal device and the field device, but may instead be carried out through the first, already-paired terminal. For example, in a proxy mode, the second terminal may forward its pairing-request packet, including the obtained code, to the first terminal (e.g. over a short-range Bluetooth link or NFC tap), and the first terminal then relays that packet to the field device and returns the field device's response to the second terminal. In a hybrid mode, only one direction may use the proxy, the second terminal scans or enters the code directly from the first terminal's display, but when it sends the pairing-request it passes it to the first terminal for onward transmission to the field device. Conversely, the code could be pulled by the first terminal and then delivered to the second, while the second establishes its own direct pre-connection to the field device for the return path.

In a mesh-relaying embodiment, the first terminal device and the second terminal device may form a short Bluetooth mesh network. Thus, the pairing-request of the second terminal device may be forwarded hop-by-hop through the first terminal to the field device, which never has more than one active point-to-point connection. For installations with a central IT backbone, a cloud-mediated mode may be used, where the first terminal device posts the generated code to a secure server; the second terminal device may retrieve it from the server and sends its pairing-request there, and the server (or another gateway) then dispatches the request to the field device. In a wired-proxy variant, the second terminal may hand its request to the first terminal via a temporary cable (USB, serial or similar), and the first terminal over its wireless link completes the pairing handshake on behalf of the second. The foregoing description is merely illustrative of selected embodiments and is in no way limiting. Many other configurations and workflows fall within the scope of the present invention. For example, more than two terminal devices may participate in successive or concurrent pairing sequences, and any number of intermediate devices or relays may be employed to broker the code exchange.

In an example, the processing circuitry may be configured to generate the code by one or more of the following methods: hardware-based random number generation; cryptographic post-processing; time- or event-based one-time code generation; or random-based code generation. Modern microcontrollers and Bluetooth chipsets frequently include so called hardware-based random number generator (HRNG) that leverage physical noise sources, such as thermal or quantum effects, to produce truly random values with high entropy. To increase unpredictability, additional system parameters, including the current timestamp, device identifiers, e.g., serial numbers or MAC addresses, or even arbitrary sensor readings, may be factored into the seed. This fusion of physical entropy sources and dynamic device states may ensure that each generated code remains both unique and practically impossible for an attacker to reverse-engineer.

The raw random output from the HRNG may be then subjected to cryptographic post-processing. For instance, the HRNG output may be used as a seed for a pseudo-random number generator (PRNG) that transforms the seed into a code through secure algorithms. Depending on implementation requirements, the code could be derived by means of a cryptographic hash, such as HMAC-SHA-256 or SHA-3, where a combination of seed, time data, and device-specific IDs is hashed to yield a high-entropy result. Alternatively, certain implementations employ advanced encryption standards (e.g., AES in counter mode) to generate cryptographically strong pseudo-random numbers from an initial key or seed value. The objective of these post-processing steps may be to ensure that the output code cannot be feasibly guessed or derived, even if certain aspects of the seed were to become partially known.

Another variant may be time- or event-based one-time code (OTC) generation, or OTP (One-Time Password) concepts. For instance, time-based one-time passwords (TOTP) may link each generated code to the current system clock, enabling the field device to produce a novel code at each defined time interval without retaining the exact codes in persistent storage. Event-based one-time codes (HOTP), by contrast, may rely on incrementing an internal counter each time a specified trigger occurs, such as a button press, thus generating a fresh code. While TOTP has the advantage of not requiring strict state management (beyond clock synchronization), HOTP may be simpler for purely event-driven devices, especially those that prompt code creation only when a user physically interacts with the hardware.

To reinforce security, additional protective measures may be implemented. For example, limiting the number of allowed failed attempts before temporarily blocking code submissions, ensuring codes reside only in volatile memory (RAM), and optionally logging security-relevant events like repeated unsuccessful entries. Taken together, these design choices may allow operators to tailor both complexity and usability, thereby combining robust security with the practicalities of industrial environments and remote maintenance scenarios.

Finally, the field device may employ a simple random-based code generation algorithm, for instance producing a six-digit numeric sequence, e.g., "483921", or an alphanumeric string. This straightforward method, which could rely on either a hardware RNG or a suitably seeded PRNG, may be especially useful when manual entry is anticipated. Even this simpler variant may be enhanced by incorporating the aforementioned cryptographic seeds and time or device signatures.

According to a second aspect of the present disclosure, there is provided a terminal device configured for establishing a wireless connection with a field device, the terminal device comprising:
- a detection element configured to obtain a code outputted by the field device;
- a communication interface configured to transmit the obtained code to the field device, wherein the wireless connection between the terminal device and the field device is established when the code is matched by the field device.

The terminal device may comprise at least a detection element for obtaining the code output by the field device, and a communication interface for transmitting the obtained code back to the field device.

The detection element may be realized through different hardware or software-based means. For example, where the field device displays a machine-readable symbol, a built-in camera on the terminal device may function as the detection element. If the field device outputs plain text, the detection element may simply be an on-screen prompt enabling a user to manually type the code into a dedicated field on the terminal device's interface, for example.

The communication interface may be broadly understood as hardware and associated software layers that enable data to be sent or received according to a specific communication standard or protocol, for example. The communication interface of the terminal device may transmit that code to the field device. This communication interface may leverage standard protocols such as Bluetooth or Wi-Fi, depending on the chosen wireless technology for the connection. Upon recognizing a match between the generated code by the field device and the one returned by the terminal device, the field device may establish a wireless connection, granting the terminal device access to the data or configuration parameters that the field device hosts, for example.

By separating code acquisition, i.e., through the detection element, from code submission, i.e., via the communication interface, the terminal device can adapt to various industrial or commercial settings. In hazardous or remote environments, for instance, a maintenance technician may find it more reliable to scan a code visibly displayed on the field device rather than enter lengthy passphrases.

In an example, the communication interface may be configured to transmit the obtained code as a pairing request packet. This may mean that, rather than sending the code as a loosely structured data message or a separate control signal, the terminal device may integrate the code into a protocol-specific packet that initiates or finalizes a pairing sequence. Therefore, the terminal device may bring up a temporary, low-privilege link, commonly called a pre-pairing or discovery channel, using the underlying wireless standard, for example, an un-bonded Bluetooth Low Energy connection, a Wi-Fi protected setup frame, or a Zigbee join request. The terminal device may embed the retrieved pairing code directly into this packet, ensuring that the field device receives and validates the code in a single, well-defined protocol step, for example. This approach may simplify firmware development on both sides. For example, the field device may listen specifically for incoming pairing request packets, extract the code portion, and perform the comparison against the generated code.

Placing the code in pairing request packet helps maintain a clear logical separation between "normal" data traffic and authentication traffic. It reduces the likelihood of accidental or improper handling of the code by other processes or layers of the communication stack. Furthermore, if the wireless protocol supports encryption or partial encryption for control packets, the code may be transmitted securely, minimizing the risk that third parties might intercept and reuse.

In an example, the terminal device may further comprise a software application configured to obtain the generated code by the field device and transmit the obtained code to the field device. This software application may form a logical nexus between subsystems in the terminal device, such as the detection element, e.g., camera, NFC reader, or text-input interface and the communication interface, e.g., Bluetooth Low Energy, Wi-Fi, or another radio stack. For example, as soon as an operator initiates the pairing routine, the application may activate the relevant hardware, acquires the code in volatile memory, verifies its syntax, and translates it into the byte sequence required by the pairing protocol. It then may raise a low-level connection to the field device, embeds the formatted code in a dedicated authentication packet and transmits it; upon receipt of a positive acknowledgement, the link may be promoted to a fully authorized session and the application automatically unlocks the instrument-specific user interface.

An example for such an app may run on an Android maintenance tablet. When a user taps e.g., "Pair with Device," the application may open the camera preview, decodes the QR string displayed on the transmitter, validates its length, starts a BLE GATT session, writes the code to a dedicated authentication characteristic and waits for confirmation, for example. Within a time window, for example, few hundred milliseconds, the field device may reply, the app elevates the connection and presents the user with calibrated sensor data, all without recourse to fixed passwords or secondary utilities.

In an example, a first terminal device that established a wireless connection with the field device may be configured to issue a delegation request to the field device, thereby causing the field device to generate a further code; and upon receipt of the further code from the field device, the first terminal device may be further configured to output the generated code for obtainment by a second terminal device, wherein the wireless connection between the second terminal device and the field device may be established when the code is matched by the field device.

For example, the terminal device may operate not only as a consumer of codes but also as a delegation agent for a second terminal device. Once the first terminal device has established a wireless connection to the field device, it may issue a delegation request over that same connection channel, for example. The processing circuitry of the field device may respond by generating a pairing code and returning it to the first terminal device via the communication circuitry. The first terminal device may then present this code, e.g., as human-readable text on its display, as a two-dimensional barcode for optical scanning, or via NFC/RFID, to a second terminal device. The second terminal device, having obtained the code from the first terminal device, may initiate its own pairing request to the field device. The communication circuitry of the field device may accept the provisional connection and passes the returned code to its processing circuitry, which may perform a bit-for-bit (or checksum-based) comparison with the originally generated value. Only if the codes match does the communication circuitry may establish a wireless connection between the field device and the second terminal device. This delegated-pairing mechanism thus may allow an already-paired device to securely authorize another access without both physically attending the instrument, for example.

In an example, the code may be obtained manually by a user or scanned. The terminal device's detection element may operate in several complementary modes. In the manual mode the device may present a graphical user interface, for example on a touch-screen or via a physical keypad, in which the user types the alphanumeric code displayed by the field device, for example. An input-validation routine may check length, permitted character set and, where present, an embedded checksum before copying the code into an internal pairing buffer.

In the scan mode the terminal device may employ an integrated camera module with an image-signal processor, for example. The field device may show the code visually, for instance as a QR code; the terminal device may align the camera, captures an image and decodes the pattern, e.g., with a software library. The decoded string may be likewise stored in the pairing buffer. As an alternative to optical capture, the scan path may rely on an RFID reader, or similar, if the field device emits the code as a contactless tag, for example.

Other examples for obtaining the code include voice-to-text entry as an additional fallback, an augmented-reality overlay to confirm successful capture, NFC tag reading as an alternative to optical output, and a retry counter that limits repeated attempts to thwart brute-force attacks.

According to a third aspect of the present disclosure, there is provided a system for a wireless connection process, comprising at least a field device and a terminal device.

The field device comprises a processing circuitry that generates a code, an output circuitry that presents this code, for example as plain text, and a communication circuitry that receives the code transmitted by the terminal device, verifies it and, if the code matches, establishes a wireless connection.

The terminal device, in turn, comprises a detection element that allows e.g., a user to obtain the displayed code, and a communication interface that packages the obtained code.

In addition to the hardware elements described above, the system may include one or more computer-program products, namely software packages or firmware, comprising instructions that, when executed by a data-processing apparatus, implement the wireless connection method of the first aspect. These program products may e.g., be delivered as downloadable code or embodied on tangible, computer-readable media such as USB flash drives, SD cards, optical discs or ROM chips. When installed, the code may be loaded from the medium into the system's active memory, at which point the processor assumes control of the inventive functionality. Within the field device, the data-processing system's processor may comprise the processing circuitry, for example.

The terminal device may comprise a separate processor that instantiates the application logic that operates the detection element to obtain the displayed code for example.

Working together, these components may provide end-to-end security as only a terminal device that returns the correct code may establish a wireless connection. Because the wireless layer is not fixed to a single standard, the same workflow may be implemented over Bluetooth Classic, BLE, Wi-Fi Direct or a proprietary RF protocol, or similar, making the system adaptable to many industrial installations, for example.

According to a fourth aspect of the present disclosure, there is provided a method for establishing a wireless connection between a field device and a terminal device, the method comprising the steps of:
generating a code at the field device,
outputting the generated code for obtainment by the terminal device,
obtaining, by the terminal device, the code outputted,
transmitting the obtained code to the field device,
receiving the obtained code from the terminal device,
comparing the generated code with the received code, and
establishing the wireless connection between the field device and the terminal device when the generated code matches the received code.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a schematic illustration of a system for wirelessly pairing a mobile terminal device with a field device in an industrial environment.
Figure 2 shows a block-diagram of an exemplary field device and a terminal device and their key functional modules.
Figure 3 schematically depicts a method for establishing a secure wireless connection between a field device and a terminal device.

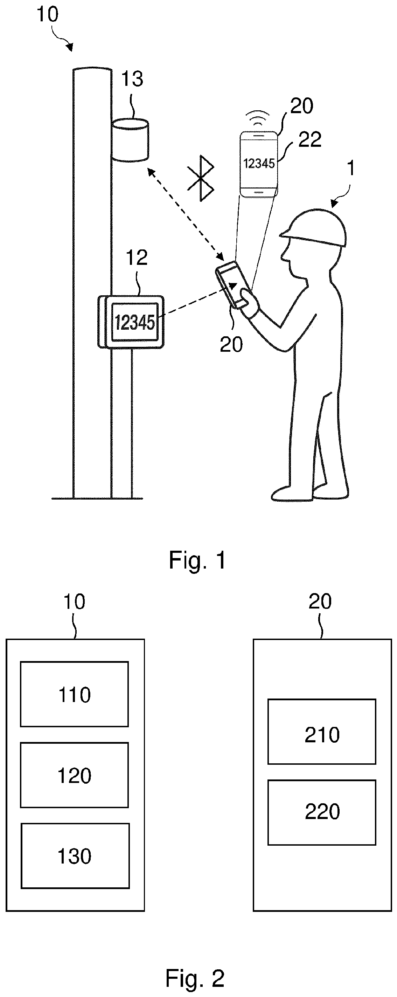

Figure 1 illustrates a secure wireless pairing process between a field device 10 and a terminal device 20. The field device 10, mounted on a support column, generates a one-time pairing code, shown on a display unit 12 as "12345", which in alternative embodiments may be rendered as a QR- or DataMatrix symbol, broadcast via an NFC/RFID tag, or similar, for example.

Above the display unit 12, a sensor 13, e.g., a pressure or temperature transmitter, or similar, is mounted several meters above the plant floor, illustrating limited physical access. An operator 1 obtains the displayed code using terminal device 20. In a manual-entry mode, the operator 1 reads "12345" from the display unit 12 and enters the same digits via the terminal's detection element 22, for example, a touchscreen or physical keypad. In an automatic-capture mode, the operator 1 may align a camera or barcode scanner of the terminal device 20 with the display unit 12 of the field device 10, and the terminal device 20 may automatically decode a visual code, for example.

When a new pairing session is requested, for example by pressing a local HMI button or via a remote maintenance command, the field device 10 may first enter an advertising state to establish a wireless pre-connection. In this preliminary handshake the field device 10 may broadcast lightweight beacons, e.g., BLE advertising packets, or opens a low-level discovery channel such as Bluetooth Classic, Wi-Fi Direct, or similar, and the terminal device 20 may respond by initiating a provisional link, for example. During this pre-connection phase, which may be performed at a reduced security level and with only minimal, unauthenticated message exchange, terminal device 20 obtains the displayed code "12345" either by manual entry, e.g., by reading the code from display 12 and typing it via its touchscreen or keypad, or by automatic capture using a camera or barcode/NFC reader of the terminal device 20, for example. Importantly, no sensitive operations such as reading sensor 13 values or modifying device parameters may be permitted until full authentication. The pre-connection alternatively may occur over a wired port, for example via HART, Fieldbus or Ethernet-APL, where a handheld configuration tool or central controller may trigger code generation, receives the code over the physical cable, and then uses it to perform the wireless pairing, for example.

A pre-connection phase may be initiated as follows:
As soon as a new pairing session is requested, whether by pressing a local HMI 'Pair' button, by sending a remote command over a network communication interface, or by issuing a pairing-initiate command from an already paired terminal device, the field device's 10 communication circuitry 130 may switches its radio into an advertising (or discovery) mode. In Bluetooth LE this may take the form of periodic beacon packets; in Bluetooth Classic or Wi-Fi Direct it opens a discoverable service or scan response.

The terminal device 20, operating in scan or discovery mode, may listen for those beacons or discovery signals. Upon detecting the field device's 10 advertising, the terminal device 20 may issue a connect request to the field device's 10 address, thereby establishing a provisional, unauthenticated link, the pre-connection, over which only the code, or pairing code exchange may occur.

Within this pre-connection channel, the terminal device 20 may send its pairing-request packet containing the obtained code, and the field device 10 may receive it for verification.

In some embodiments, the field device 10 may also support a wired pre-connection, in which a handheld maintenance tool or central controller issues a "start pairing" command over HART, Fieldbus or Ethernet/APL. The field device 10 may then return its code over the same wired link before automatically enabling its radio and proceeding with the wireless pairing request, for example.

Once terminal device 20 has obtained the code, it may be packaged it into a standardized pairing-request packet. This may then be transmitted back to field device 10, e.g., over the provisional link, depicted by the Bluetooth symbol and a dashed arrow. The communication circuitry 130 of field device 10 then may forward the returned code to processing circuitry 110, which may perform a bit-for-bit or checksum-based comparison with the originally generated value, for example. If the codes match and remain within their validity window, the communication circuitry 130 may upgrade the pre-connection into a fully authorized, encrypted wireless session, unlocking access to sensor readings and configuration, for example. If verification fails or the code has expired, field device 10 may invalidate the code, refuses the connection, and may automatically generate a new code for a subsequent attempt.

This workflow, initial pre-connection beaconing or wired handshake followed by strict pairing-request exchange and link upgrade, may ensure end-to-end security by allowing only a terminal device in possession of the correct, one-time code to establish meaningful access, while still offering technicians flexible capture methods and seamless operation.

Figure 2 shows a block-diagram of an exemplary field device 10 and a terminal device 20 and their key functional modules. The filed device 10 comprises several subsystems, such as a processing circuitry 110, an output circuitry 120, and a communication circuitry 130.

The processing circuitry 110 may represent one or more data-processing apparatuses, e.g. a microcontroller, SoC or embedded CPU and associated RAM, executing program instructions to generate a transient pairing code, enforce its time-limited validity and compare any received code against the stored value. These instructions may be provided by one or more computer-program products, which may be embodied as firmware in non-volatile memory on the field device 10 or as software modules loaded from a computer-readable medium, such as a USB stick, SD card or optical disc.

The output circuitry 120 may denote hardware and low-level drivers, e.g., responsible for presenting the generated code in an obtainable format. This implementation may comprise an integrated display panel (LCD, OLED or e-ink) capable of rendering plain text or machine-readable symbols (QR, DataMatrix), an NFC/RFID tag emitter, or audio/haptic actuators, for example.

The communication circuitry 130 may comprise e.g., a radio transceiver and accompanying protocol stack, such as Bluetooth Classic, Bluetooth Low Energy, Wi-Fi Direct, or a proprietary RF solution. In operation, the processing circuitry 110 may instruct the communication circuitry 130 to enter an advertising or discovery mode, during which the field device 10 broadcasts lightweight beacons or scan-response signals that a terminal device 20 can detect. This exchange may establish a provisional pre-connection over which only a minimal set of unencrypted control messages, notably the terminal's 20 pairing-request packet containing the obtained code, may be sent.

Upon receipt of the pairing-request packet, the communication circuitry 130 may forward the embedded code to processing circuitry 110, e.g., for bit-for-bit, or checksum-based, comparison with the originally generated value. If verification succeeds, and provided the code remains within its valid time window, the processing circuitry 110 may signal the communication circuitry 130 to upgrade the provisional link into a fully authorized, encrypted session. At that point, the communication circuitry 130 may negotiate e.g., session keys, activates full data-exchange permissions, and allows the terminal device 20 to access sensor 13 readings or modify configuration parameters. Should the code fail to match or have expired, the communication circuitry 130 may reject the pairing request and the provisional link remains closed or is torn down, for example.

The terminal 20 also comprises a plurality of functional modules, two of which are shown by way of example, namely a detection element 210 and a communication interface 220.

The detection element 210 may comprise hardware such as a camera, barcode/NFC reader or keypad/touchscreen, together with software drivers and decoding routines, that allow the terminal's 20 to obtain the pairing code presented by output circuitry 120 of the field device 10, for example.

The communication interface 220 may comprise a wireless transceiver hardware, e.g. a Bluetooth LE radio or Wi-Fi Direct chipset, and protocol stack, along with associated firmware and application-level logic., for example. Controlled by application logic, e.g., loaded from computer-program products, the communication interface 220 may package the obtained code into a standardized pairing-request packet and transmits it over a provisional link back to field device 10.

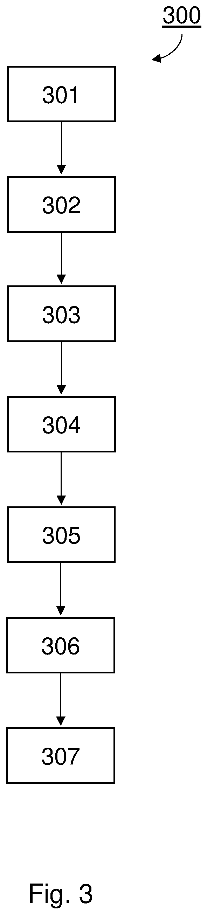

Figure 3 schematically depicts a method 300 for establishing a secure wireless connection between a field device 10 and a terminal device 20.

In a first step 301, the field device generates a code, such as a single-use pairing code. This code may be created by a hardware-based random-number generator, a time- or event-based one-time-password algorithm, or a cryptographic post-processing routine, for example.

In a next step 302, the field device 10 presents the generated code via its output circuitry. This presentation may occur optically e.g., an integrated display 12, such as an LCD, OLED or e-ink display, but alternatively as a QR- or DataMatrix symbol, an encrypted barcode, an NFC/RFID tag emission, or similar.

In a further step 303, the terminal device 20 obtains the displayed code. For example, a user 1 may read an alphanumeric string presented by the display 12 of the field device 10 and manually enters it using a touchscreen or keypad of the terminal device 20. In another embodiment the detection element 210 of the terminal device 20, such as a camera, barcode scanner or NFC/RFID reader, may automatically decode a presented symbol or tag.

Once the code is obtained, the terminal device 20 may package it into a standardized pairing-request packet and transmits it in a further step 304 back to the field device 10. This transmission may take place over a provisional, unauthenticated link established by the field device's 10 communication circuitry 130, for example via Bluetooth **LE** advertising/response or a comparable RFID/NFC handshake.

In the next step 305, the field device receives the obtained code, e.g., as a pairing-request packet, and extracts the returned code. The field device 10 then compares the received code against the originally generated value in a further step 306. Therefore, the processing circuitry 110 may perform a bit-for-bit match or checksum verification and confirms that the code remains within its predetermined validity period, for example.

In a final step 307, the wireless connection between the field device 10 and the terminal device 20 is established when the generated code matches the received code. During this transition, session keys may be negotiated, and data-exchange services are unlocked, allowing the terminal device 20 to read sensor 13 values or modify configuration parameters, for example. If the codes do not match or the code has expired, the field device 10 may invalidate the code, refuses the connection, and may automatically regenerate a new pairing code for a subsequent attempt, for example.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. A field device (10) configured for establishing a wireless connection with a terminal device (20), the field device (10) comprising:
- a processing circuitry (110) configured to generate a code;
- an output circuitry (120) configured to output the generated code for obtainment by the terminal device (20); and
- a communication circuitry (130) configured to communicate with the terminal device (20) and to receive the obtained code from the terminal device (20), wherein the processing circuitry (110) is configured to compare the generated code with the received code, wherein the communication circuitry (130) is configured to establish the wireless connection to the terminal device (20) when the generated code matches the received code.

2. **The** field device (10) according to claim 1, wherein the generated code is a time-limited code that is presented for a predetermined period.

3. **The** field device (10) according to any of the preceding claims, wherein the generated code is valid for a single connection attempt.

4. **The** field device (10) according to any of the preceding claims, wherein the output circuitry (120) is configured to output the generated code in at least one of the following:
- plain text and/or machine-readable code.

5. **The** field device (10) according to any of the preceding claims, wherein the processing circuitry (110) is configured to initiate the code generation by one of the following:
- manually via a local human-machine interface;
- a network communication interface; or
- via a mobile application.

6. **The** field device (10) according to any of the preceding claims, wherein the communication circuitry (130) is configured to terminate the established wireless connection prior to initiating a new wireless connection process.

7. The field device (10) according to any of the preceding claims, wherein:
- the processing circuitry (110) is further configured to generate a code in response to a delegation request issued by a first terminal device (20) that already established a wireless connection; and
- the communication circuitry (130) is configured to transmit the code to the first terminal device (20) for obtainment by a second terminal device,
wherein the communication circuitry (130) is configured to communicate with the second terminal device and to receive the obtained code from the second terminal device,
wherein the processing circuitry (110) is configured to compare the generated code with the received code, wherein the communication circuitry (130) is configured to establish the wireless connection to the second terminal device when the generated code matches the received code.

8. The field device (10) according to any of the preceding claims, wherein the processing circuitry (110) configured to generate the code by one or more of the following methods:
- hardware-based random number generation;
- cryptographic post-processing;
- time- or event-based one-time code generation; or
- random-based code generation.

9. A terminal device (20) configured for establishing a wireless connection with a field device, the terminal device (20) comprising:
- a detection element configured to obtain a code outputted by the field device;
- a communication interface configured to transmit the obtained code to the field device, wherein the wireless connection between the terminal device (20) and the field device (10) is established when the code is matched by the field device.

10. The terminal device (20) according to claim 9, wherein the communication interface is configured to transmit the obtained code as a pairing request packet.

11. The terminal device (20) according to any of the preceding claims 9 or 10, further comprising a software application configured to obtain the generated code by the field device (10) and transmit the obtained code to the field device.

12. The terminal device (20) according to any of claims 9 to 11, wherein:
- a first terminal device (20) that established a wireless connection with the field device (10) is configured to issue a delegation request to the field device (10), thereby causing the field device (10) to generate a further code in response to the delegation request; and
- upon receipt of the further code from the field device (10), the first terminal device (20) is further configured to output the generated code for obtainment by a second terminal device, wherein the field device (10) is configured to communicate with the second terminal device and to receive the obtained code from the second terminal device,
wherein the wireless connection between the second terminal device and the field device (10) is established when the generated code matches the received code.

13. The terminal device (20) according to any of the preceding claims 9 to 12, wherein the code is obtained manually by a user or scanned.

14. System for a wireless connection process, comprising:
- a field device (10) according to claim 1, and
- a terminal device (20) according to claim 9.

15. A method (300) for establishing a wireless connection between a field device (10) and a terminal device (20), comprising the steps of:
- (301) generating a code at the field device (10),
- (302) outputting the generated code for obtainment by the terminal device (20),
- (303) obtaining, by the terminal device (20), the code outputted,
- (304) transmitting the obtained code to the field device (10),
- (305) receiving the obtained code from the terminal device (20),
- (306) comparing the generated code with the received code, and
- (307) establishing the wireless connection between the field device (10) and the terminal device (20) when the generated code matches the received code.
